# EUROPEAN PATENT APPLICATION

(11) **EP 3 443 874 A1**
(43) Date of publication of application: **20.02.2019**
(21) Application number: 18189332.2
(22) Date of filing: 16.08.2018
(51) Int. Cl.: A47G 19/22, A47J 43/27, A45F 3/16, B01F 11/00

(54) **IMPROVED CONTAINER FOR DRINKABLE LIQUIDS**

(30) Priority: 17.08.2017 SE 1751000
(71) Applicant: Rittri, Bengt, 114 46 Stockholm (SE)
(72) Inventor: Rittri, Bengt, 114 46 Stockholm (SE)
(74) Representative: AWA Sweden AB

(57) **Abstract**

A liquid container (100,200,300) and a method (400) for using a liquid container (100,200,300) is provided. The container (200,300) for a drinkable liquid (270,360,370) comprises a foldable body (110) having an opening (111,211,224,241,311) and a cap (120,220,222,320) for closing the opening (111,211,224,241,311). A portion of the inside of the body (110,115,210,310) is textured for interacting with a flavoring means when the body (110,115,210,310) is being pressed, the flavoring means being for flavoring a liquid (270,360,370) arranged in the container (200,300). The container (200,300) further comprises a filtering means arranged at the opening (111,211,224,241,311) of the body (110,115,210,310) to filter liquid (270,360,370) exiting the container (200,300).

## Description

### Field of the invention

The present invention generally relates to the field of containers for drinkable liquids. In particular, the present invention relates to a container for infusing a drinkable liquid with a flavoring means.

### Technical background

It is more and more common to use refillable water bottles to ease the impact on the environment instead of purchasing a new water bottle or other drink in a bottle for each use. However, some people find drinking tap water less interesting in comparison to the store provided flavored water.

There are ways of improving the taste of the water to make people drink tap water instead of flavored water from a single use bottle. Flavor can be added to the water, for example, by adding a liquid flavoring means such as juice or an artificial extract, or by soaking fruit or vegetables in it.

When soaking fruit or vegetables, one drawback is that the fruit and vegetables may make drinking the water from the bottle more difficult, as they may clog the opening through one may drink or they may exit the bottle with the water. Further, soaking may not provide enough flavoring in comparison with using extracts or liquid flavorings.

Hence, there is a need for an improved method for flavoring water or liquids.

### Summary

It would be advantageous to achieve a liquid container at least alleviating some of the above mentioned drawbacks. To better address one or more of these concerns a liquid container and a method as defined in the independent claims are provided. Preferable embodiments are defined in the dependent claims.

Hence, according to an aspect, a container for a drinkable liquid is provided. The container comprises a foldable body having an opening and a cap for closing the opening. A portion of the inside of the body is textured (i.e. has a textured pattern) for interacting with a flavoring means for the liquid, the flavoring means being arranged in the container, when the body is being pressed. The container further comprises a filtering means arranged at the opening of the body to filter liquid exiting the container.

The foldable body is soft, to allow for folding or rolling the container when empty. The soft or foldable body also allows for interacting with a flavoring means arranged within the body. A flavoring means and a liquid can be arranged in the container, and the soft body can be pressed, by for example a hand of a user of the container, or in another mechanical way interact with the flavoring means to release flavors into the liquid.

The cap prevents the liquid from exiting the bottle while the flavoring means is interacted with or during storage.

To further improve the flavoring of the liquid and the interaction with the flavoring means, the inside of the body is textured or patterned. The pattern or texture increases the friction between the flavoring means and the inside of the body, thereby improving the interaction with the flavoring means to release flavors from it.

The interaction with the flavoring means may leave flavoring means residue or parts in the liquid that a person may not want to drink. With the filtering means such residue or parts are filtered so that they stay in the container when the liquid exits the container through the opening. By having the filtering means arranged at the opening, a user interacting with the flavoring means have more space to do so as they may be less restricted by the filtering means in comparison to having the filtering means being arranged somewhere else in the body of the container. The filtering means may be arranged at or near the opening to provide sufficient space in the rest of the container for interacting with the flavoring means.

According to a second aspect, a method for using the container according to the first aspect is provided. The method comprises arranging a flavoring means and a liquid in a body of the liquid container and closing the container with a cap. The method further comprises interacting with the flavoring means in the container via a patterned section of an inside of the body and filtering the liquid with a filtering means.

In this way, the liquid is infused or flavored with a flavoring means, even a flavoring means where soaking may not be appropriate or provide enough flavor to the liquid may be used. A user can arrange a liquid and a flavoring means in the body or the container, and then by the use of a hand interact with the flavoring means, for example, by pressing portions of the body of the container towards each other so that the flavoring means is pressed between the portions. By pressing, or in another way interacting, with the flavoring means, flavors are released into the liquid also arranged in the body of the container.

It has been realized that having a soft body allows for interacting with a flavoring means in a liquid in the container so that flavors are released into the liquid, i.e. the liquid is infused with flavor from the flavoring means. In this way, more flavors than, for example, by just soaking the flavoring means, are released. Further, by having the inside of the body being textured or pattern the friction between the flavoring means and the inside of the body is increased, thereby providing better interaction with the flavoring means.

By "flavoring means" it is meant any at least partly solid flavoring suitable for a liquid. Examples may be fruits, berries, vegetables, etc.

The "foldable body" is to be interpreted as a at least semi-flexible body that can be folded or rolled when empty.

By "texture" or "pattern" it is meant recesses or extrusions in the inside of the body to form a pattern and add a texture to the material.

The "filtering means" is means for filtering a liquid suitable for drinking. The filtering means does not remove the flavoring of the liquid, but removes larger residue or particles in the liquid that may be unpleasant for a user to drink.

The "liquid" may be any drinkable liquid.

According to an embodiment of the first aspect, the filtering means is removable. This allows for removing particles or residue the filter has filtered from the liquid and thereby kept in the body of the container, so that the container may be easily cleaned and reused. Having a removable filter also allows for changing the filter, either for maintenance of the container or because another filter may be desirable depending on the flavoring means. This allows for more flexibility for a user as the filtering means may be chosen or adjusted according to taste and how much particles a specific user likes in their drink. Further, as the filtering means is removable it may be easier to clean.

The filtering means may be arranged downstream or upstream from the opening in a direction of the flow of the liquid exiting the container.

According to an embodiment, the filtering means is a strain. The strain may, for example, be a plastic or metal strain. The strain may be arranged in the body or in the opening of the container. In some examples it may form part of the cap.

By using a strain, the size of the filtering means can be kept small, allowing for a light weight and easy to use container.

According to an embodiment, the texturing of the portion of the inside of the body is at least one of an extrusion and a recess. Also other alternatives for the texturing may be used, for example, another material may be placed and patterned on the inside of the bottle. Also a mix of the described texturings may be envisaged.

According to an embodiment, the texturing is at least one of a longitudinal or latitudinal groove, a groove at an angle relative a top-bottom axis, dots, knots, a spiral, and a circle.

In this way, the interaction with the flavoring means is improved, as the texturing on the inside of the body helps holding the flavoring means in place for a user to interact with it.

According to an embodiment, the body comprises a soft material.

By having a body comprising a soft material, a user can press portions of the body towards or against each other. This allows for interacting with the flavoring means by holding it in-between the two portions pressed towards each other.

When the user interacts with the flavoring means by pressing portions of the body the liquid moves in the bottle, which is made easier by the soft material.

According to an embodiment, the body comprises silicone or plastics. By having a body comprising a soft material, such as silicone or plastics, a user can press portions of the body against each other. This allows for interacting with the flavoring means.

According to an embodiment, the textured or patterned portion of the body is arranged such that the textured or patterned portion of the body is pressable by a user to interact with the flavoring means.

According to an embodiment, the liquid container further comprises means for cooling the liquid arranged at the opening of the container. In this way, the liquid may be cooled when exiting the container.

According to an embodiment, the means for cooling the liquid is a space for keeping an ice cube. The ice cube is kept within a space at the opening of the container. The space may, for example, be within the cap of the container or at the filtering means. In this way, the liquid may be cooled when exiting the container.

According to an embodiment of the second aspect, the interaction is one of mashing, pressing, massaging, or squeezing to release flavor from the flavoring means. The texture of the inside of the body may be adapted for enhancing these interactions, for example, by having more than one texture pattern or having textures in different directions.

According to an embodiment, the method further comprises arranging a filtering means at an opening of the body. By arranging the filter at an opening of the body, i.e. downstream from the body of the container in a direction of a liquid exiting the container, after inserting a liquid and a flavoring means in the body of the container, the liquid is filtered before exiting the container.

According to an embodiment, the flavoring means is a fruit, berry or vegetable. The texture of the inside of the body may be adapted for interacting with a fruit, a berry or a vegetable.

### Brief description of the drawings

The invention will be better understood through the following illustrative and non-limiting detailed description of preferred embodiments, with reference to the appended drawings, on which:
Figure 1 is a schematic view of a foldable liquid container according to an embodiment;
Figure 2 is an exploded view of a soft liquid container according to an embodiment;
Figure 3 is a schematic view of a method for using a liquid container according to an embodiment.

All figures are schematic, not necessarily to scale, and generally only show parts which are necessary in order to elucidate the invention, wherein other parts may be omitted or merely suggested.

### Detailed description of embodiments

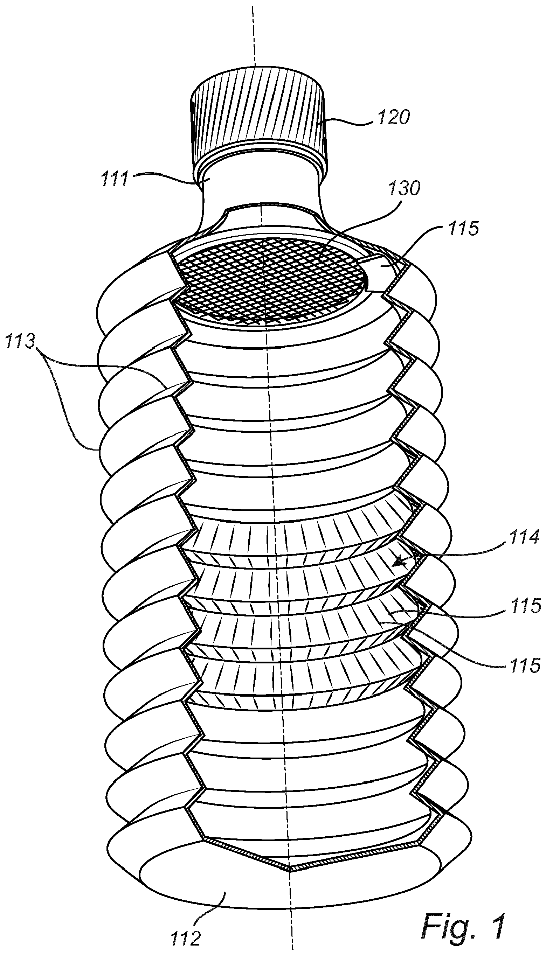

A liquid container 100 according to an embodiment is shown in Figure 1. The liquid container 100 has a foldable body 110 and a cap 120.

The foldable body 110 has a bottom side 112 and an opening 111 at a top side. Along the height (the height being in a top-bottom direction) of the body 110 there are substantially parallel folds 113 around the body 110 in alternating directions to provide for folding the bottle when empty. The body 110 comprises a soft and flexible material, such as silicone or plastics, so that the body can be folded and so that portions of the body may be pressed against each other by a user.

The inside of the body 110 has a textured pattern 114. In this example the pattern is grooves in alternating directions at a portion in the middle of the body 110. The pattern may also be present along the whole inside of the body, substantially the whole inside of the body, or more than one portion of the inside of the body. Alternatively, or in combination, the pattern may comprise a longitudinal or latitudinal groove, a groove at an angle relative a top-bottom direction, a dot, a spiral, a circle, or another texture which helps increase friction with a flavoring means, or a combination thereof.

The liquid container 100 also comprises a strain 130. The strain 130 is arranged at the top of the liquid container 100. The strain 130 may comprise plastics or metal, and is harder or more rigid than the body of the container. The shape of the strain is adapted to the shape of the opening of the container so that it may be inserted through the opening 111. The strain is flexible so that it may be pushed through the opening and then extending into its place between the extrusions 115. An alternative to the extrusions 115 may be a recess on the inside of the body in which a side of the strain may be arranged.

The strain is in this example arranged within extruding portions of the body 115, which keeps the strain 130 in place while liquid is flowing through it. As the body is soft or flexible, the strain 130 is removed by bending or extending the body. In a similar way, the strain 130 is inserted by pushing it into place, through the opening 111, between the extruding portions 115 of the body 110.

The opening 111 is wide enough to provide for allowing a flavoring means, residue thereof and the strain to enter and exit, and to provide for relatively easy cleaning of the container.

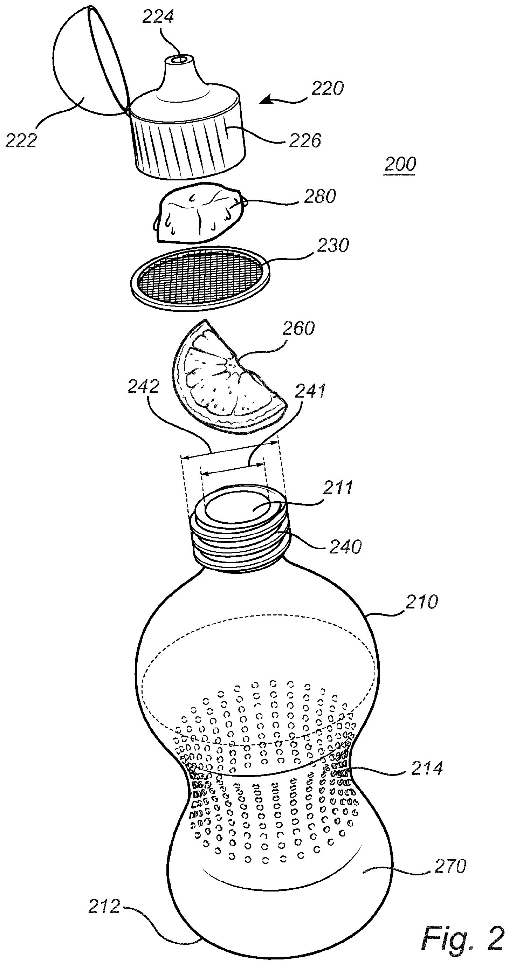

An exploded view of another embodiment of a liquid container 200 is shown in Figure 2. All features of the liquid container 200 shown in Figure 2 may be combined with the features of the liquid container 100 shown in Figure 1, and vice versa.

The liquid container 200 has a soft body 210. The body 210 can be rolled or folded when the container 200 is not in use or not filled. The soft body has in this embodiment an elongated body extending from the top of the bottle (the top being where the opening is). Also other shapes may be used for the body, for example, an elongated body in a direction orthogonal from the top-bottom direction of the liquid container, a rectangular shape, a sphere, a circle, etc.

The body 210 may comprise silicone, an elastic and flexible plastic, or another material suitable for a soft liquid container. The body may be formed of two sheets of material molded together to form a flat body in which a liquid can be arranged.

The body has a top side with an opening 211 and a bottom side 212. The top side and the opening 211 are attached to a cap connection means 240 such that the liquid container 200 may be closed by connecting the cap 220 to the cap connecting means 240. The cap connection means 240 is in this embodiment a neck with threads for a screw-on cap 220. The neck with threads is rigid so that the cap can be screwed on and contain the liquid in the container. The cap and the cap connection means may comprise the same rigid material, for example, a plastic or a metal, or another material suitable for a screw on cap and neck.

The liquid container also comprises a screw-on drinking cap 220. The cap 220 has a pattern extending from a side 226 of the cap 220 for enabling the cap 220 to be screwed on to the cap connecting means 240. The cap further comprises an opening 224 for allowing a user to drink a liquid 270 from the bottle and a cap 222 for closing it.

The liquid container 200 comprises a strain 230, adapted to be arranged between the cap connecting means 240 and the cap 220. The strain 230 is fastened to the liquid container 200 by the cap 220 being screwed on to the cap connection means 240 of the liquid container 200. The strain 230 may have a diameter larger than the diameter of the opening 241 of the cap connection means 240, and smaller than the outer diameter 242 of the cap connection means 240.

In this illustration, a liquid 270 and a flavoring means 260 are arranged in the body 210 of the container 200. The liquid 270 may, for example, be water, carbonated water, soda, lemonade, milk, or another liquid or drink. The flavoring means 260 is in this example a berry, but may be a fruit or vegetable or a combination thereof. Also other flavoring means are envisaged.

To allow for pressing portions of the body 210 towards another to, for example, press onto the flavoring means 240, it is beneficial to not fill the liquid container completely. For example, the liquid container may be filled to 75% of its total volume with the liquid.

To further allow for pressing portions of the body, the shape of the body may be elongated, or it may be flat along one plane extending from the opening of the container.

The liquid container 200 further comprises a space for keeping an ice cube 280. The space is formed by the cap and the strain 230. The liquid may be filtered before exiting the container, then pass by the ice cube and thereby be cooled before exiting the container. The space for keeping an ice cube may alternatively be formed from two strains at the opening of the container.

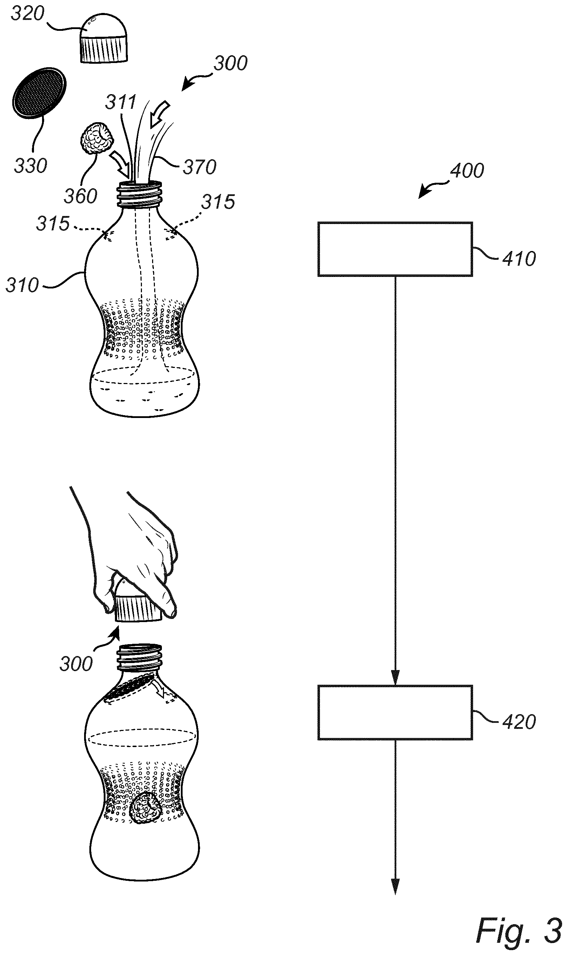

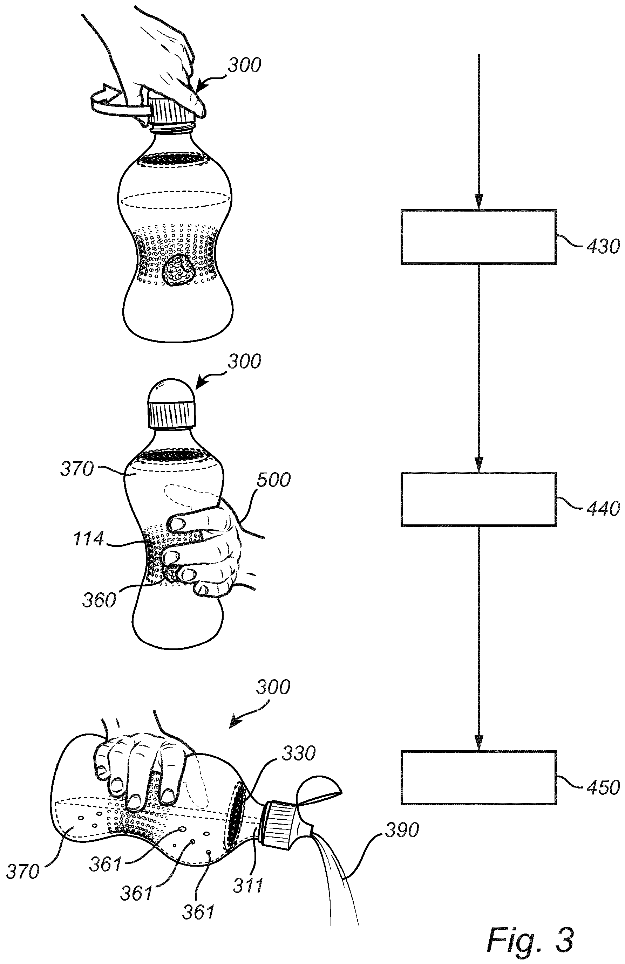

A method 400 for using a liquid container 300 according to an embodiment will now be described with reference to Figure 3. The liquid container 300 may be any embodiment or combination of features of embodiments described above with reference to Figure 1 and Figure 2.

In a first step a liquid 370 and a flavoring means 360 are arranged 410 in the body 310 of the container 300 through opening 311. The container may be filled with any amount of liquid 370, for example less than 75% of the total volume, or flavoring means 360.

In another step the filtering means 330, in this example a strain 330, is arranged 420 at the opening 311 of the body 310. The strain 330 is in this embodiment inserted through the opening 311 into the body 310 and arranged within a holding means 315. The holding means is a groove adapted for holding the strain 330. The holding means may alternatively or in combination with grooves be an extrusion or another type of recess in the body 310 of the container 300.

In another step, not shown in Figure 3, a cooling means may be arranged at the opening of the container. For example, the cooling means bay be an ice cube arranged between the cap and the strain, or it may be an ice cube arranged between two strains in the body of the container.

In another step the container is closed 430 with the cap 320, in this embodiment by screwing it on. The container may be closed in other ways with other types of caps for other containers. When the container 300 is closed any liquid 370 or flavoring means 360 cannot exit the container.

In another step a user 500 interacts 440 with the flavoring means 360 in the container 300 via the patterned section 114 of the inside of the body 310. The user may, for example, press onto the flavoring means 360 or massage it using portions of the body 310, for example a portion on one side of the container 300 and a portion on an opposite side of the container 300. In this way, flavors from flavoring means 360 may be released into the liquid 370.

When a user interacts 440 with the flavoring means 370 the flavoring means may leave residue, particles or left-overs 361. The residue 361 is filtered 450 in another step by pouring the liquid 360 through the strain 330 and through the opening 311. By the filtering, the liquid 370 has the flavoring released by the interaction with the flavoring means 360, but without the residue 361, which is contained inside the liquid container 300.

The strain 330 may be removed, for example, for cleaning the strain or the liquid container. By removing the strain residue 361 may be removed from the liquid container 300.

While the invention has been illustrated and described in detail in the drawings and foregoing description, such illustration and description are to be considered illustrative or exemplary and not restrictive; the invention is not limited to the disclosed embodiments. The skilled person understands that many modifications, variations and alterations are conceivable within the scope as defined in the appended claims. For example, the steps of the method may be performed in another order than described above, and with any embodiment of the liquid container.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. A container for a drinkable liquid comprising:
a foldable body having an opening;
a cap for closing the opening;
wherein a portion of the inside of the body is textured for interacting with a flavoring means when the body is being pressed, the flavoring means being for flavoring a liquid arranged in the container;
wherein the container further comprises a filtering means arranged at the opening of the body to filter liquid exiting the container; and
wherein the texturing of a portion the inside of the body is at least one of an extrusion and a recess.

2. A container according to claim 1 wherein the filtering means is removable.

3. A container according to any previous claim wherein the filtering means is a strain.

4. A container according to any previous claim wherein the texturing is at least one of a longitudinal or latitudinal groove, a groove at an angle relative a top-bottom axis, a dot, a spiral, and a circle.

5. A container according to any previous claims wherein the body comprises a soft material.

6. A container according to any previous claim wherein the body comprises silicone or plastics.

7. A container according to any previous claim wherein the textured portion of the body is arranged such that the textured portion of the body may be pressed by a user to interact with the flavoring means via a pattern of the textured portion such that flavors are released into the liquid.

8. A container according to any previous claim, further comprising means for cooling the liquid.

9. A container according to any previous claim, wherein the means for cooling the liquid is a space for keeping an ice cube.

10. A method for using a liquid container according to any previous claim, the method comprising:
arranging a flavoring means and a liquid in a body of the container;
closing the container with a cap;
interacting with the flavoring means in the container via a textured section of an inside of the body;
filtering the liquid with a filtering means; and
wherein the texturing of a portion the inside of the body is at least one of an extrusion and a recess.

11. The method of claim 10, wherein the interaction is one of mashing, putting pressure on, massaging, or squeezing to release flavor from the flavoring means.

12. The method of any one of claims 10-11, further comprising arranging a filtering means at an opening of the body.

13. The method according to any one of claims 10-12 or the container according to any of claims 1-9 wherein the flavoring means is a fruit, berry or vegetable.
